# EUROPEAN PATENT SPECIFICATION

(11) **EP 3 893 450 B1**
(45) Date of publication and mention of the grant of the patent: **24.07.2024**
(21) Application number: 20168679.7
(22) Date of filing: 08.04.2020
(51) Int. Cl.: H04L 47/2491, H04L 47/28, H04L 47/6275

(54) **METHOD FOR FORWARDING AN ETHERNET FRAME BY A TIME-SENSITIVE NETWORKING ETHERNET BRIDGE PROVIDED BY MEANS OF A MOBILE RADIO COMMUNICATION SYSTEM AND MOBILE RADIO COMMUNICATION SYSTEM ARRANGEMENT**
VERFAHREN ZUR WEITERLEITUNG EINES ETHERNET-RAHMENS DURCH EINE MITTELS EINES MOBILFUNKKOMMUNIKATIONSSYSTEMS BEREITGESTELLTE ZEITSENSITIVE NETZWERK-ETHERNET-BRÜCKE UND MOBILFUNKKOMMUNIKATIONSSYSTEMANORDNUNG
PROCÉDÉ POUR TRANSFÉRER UNE TRAME ETHERNET À L'AIDE D'UN PONT ETHERNET DE RÉSEAUTAGE SENSIBLE AU TEMPS FOURNI AU MOYEN D'UN SYSTÈME DE COMMUNICATION RADIO MOBILE ET AGENCEMENT DE SYSTÈME DE COMMUNICATION RADIO MOBILE

(43) Date of publication of application: 13.10.2021
(73) Proprietor: NTT DOCOMO, INC., Chiyoda-ku Tokyo 100-6150 (JP)
(72) Inventor: MUTIKAINEN, Jari, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- WO-A1-2019/214810
- WO-A1-2020/057766

## Description

The present invention relates to a method, a mobile communication system arrangement and a computer program and medium for forwarding an Ethernet frame by a Time-Sensitive Networking Ethernet bridge provided by means of the mobile radio communication system arrangement.

A mobile communication system, such as a 5G mobile communication system, may be used to provide a Time-Sensitive Networking (TSN) Ethernet bridge according to IEEE 802.1Q. For bridges according to IEEE 802.1Q functionalities like Cyclic Queuing and Forwarding are provided to enable synchronous traffic deterministic forwarding services. Efficient approaches for providing such functionalities with an Ethernet bridge provided by a mobile radio communication system are desirable.

WO 2019/214810A1 discloses methods and an apparatus to provide a Time Sensitive Network (TSN) bridge which may exploit available wireless 3GPP networks. The apparatus includes TSN Translator functions that understand the TSN protocol on one side and the 3GPP wireless protocols on the other side. WO 2020/057766 A1 discloses methods for time-aware scheduling of tome-sensitive network (TSN) stream in 5G networks.

According to one aspect to the invention, a method for forwarding an Ethernet frame by a Time-Sensitive Networking Ethernet bridge provided by means of a mobile radio communication system is provided, wherein the method is including the features of claim 1. Additional features for advantageous embodiments thereto are provided in the dependent claims.

According to another aspect to the invention, a mobile radio communication system arrangement configured to provide a Time-Sensitive Networking Ethernet bridge is provided, wherein the arrangement includes the features of claim 13.

According to another aspect to the invention a computer program and a computer readable medium is provided according to claim 14.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, e.g. a 5G (Fifth Generation) communication network as specified by 3GPP (Third Generation Partnership Project).
- Figure 2: shows an Ethernet bridge implemented by a 5G communication system (5GS).
- Figure 3: shows an example of a forwarding of an Ethernet frame by a 5GS Ethernet bridge.
- Figure 4: shows a flow diagram illustrating an Ethernet bridge forwarding process.
- Figure 5: shows a flow diagram illustrating per-stream filtering and policing (PSFP).
- Figure 6: illustrates Cyclic Queuing and Forwarding (CQF) in 2-queue operation.
- Figure 7: shows an example of a selecting a traffic class based on an internal priority value at the egress port of a 5GS Ethernet bridge.
- Figure 8: shows an example of a selecting a traffic class based on an internal priority value at the egress port of a 5GS Ethernet bridge.
- Figure 9: illustrates options to transmit an internal priority value in an Ethernet frame.
- Figure 10: shows a flow diagram illustrating a method for forwarding an Ethernet frame by a Time-Sensitive Networking Ethernet bridge provided by means of a mobile radio communication system to an embodiment.
- Figure 11: shows a mobile radio communication system arrangement configured to provide a Time-Sensitive Networking Ethernet bridge according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of the present invention are described below:
In the following, various examples will be described in more detail.

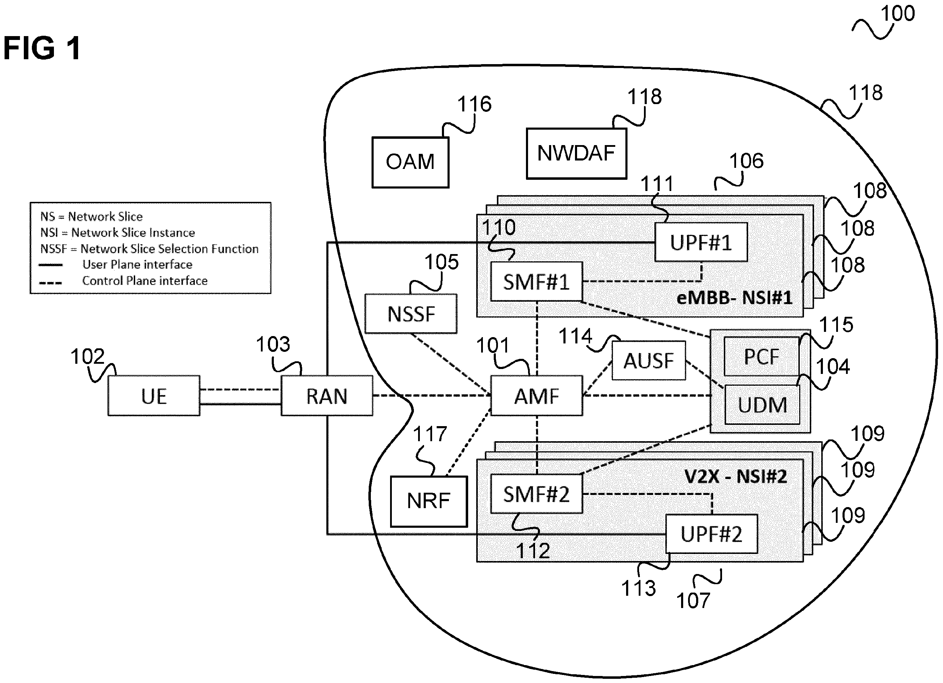

Figure 1 shows a radio communication system 100, e.g. a 5G communication network as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile (radio) communication network (e.g. a Public Land Mobile communication network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard (e.g. Wi-Fi) but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 (which may be paired with a Unified Data Repository (UDR)) and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

Further, the radio communication system 100 may include a NWDAF (Network Data and Analytics Function) 118.

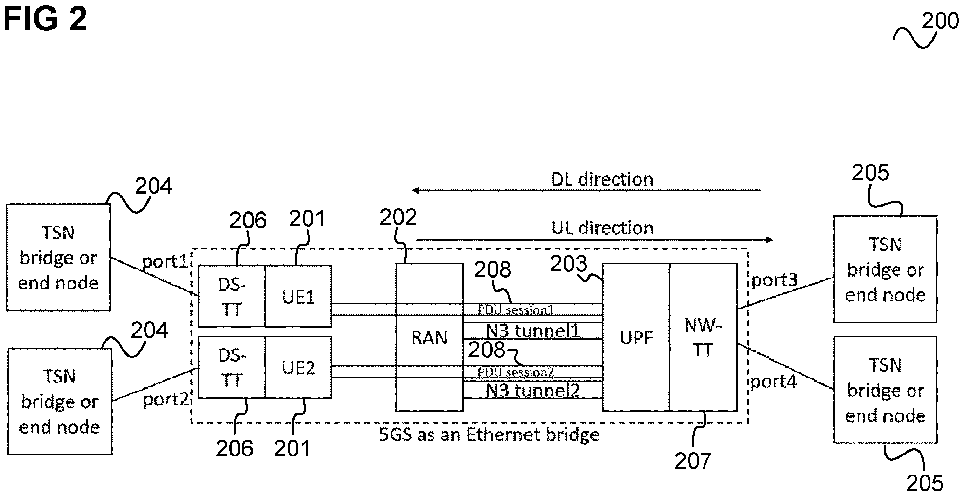

A 5G communication system (abbreviated as 5GS) may in particular be used to provide an Ethernet bridge. This is illustrated in figure 2.

Figure 2 shows an Ethernet bridge 200 implemented by a 5G communication system.

Specifically, the Ethernet bridge 200 is implemented by one or more UEs 201, for example corresponding to UE 102, a RAN 202, for example corresponding to RAN 103 and a UPF 203, for example corresponding to a UPF 111, 113.

The 5G system arrangement (i.e. the arrangement of UEs 201, RAN 202 and UPF 203) is seen as an Ethernet bridge by other TSN nodes 204, 205 (which may themselves be Ethernet bridges). An application is for example in a factory where the UEs are part of mobile robots (acting as TSN end nodes 204) and a stationary robot controller acts as TSN bridge node 205 and is connected via Ethernet with the mobile robots.

Each UE 201 is combined with (i.e. implements) a DS-TT (Device-side TSN translator) 206. It should be noted that that this is only an example and whether DS-TT and UE are combined or are separate is up to implementation.

Each DS-TT 206 implements an Ethernet port to which a next TSN node 204 is connected.

The UPF 203 is combined with (i.e. implements) a NW-TT (Network-side TSN translator) 207. The NW-TT 207 implements one or more Ethernet ports where the next TSN nodes 205 are connected.

Each UE 206 sets up an Ethernet type PDU session 208 towards the UPF 203. Each PDU session 208 is associated with one DS-TT 206. One or more PDU sessions 208 are setup with the UPF 203. The Ethernet type PDU sessions 208 convey Ethernet frames between the UEs 201 and the UPF 203. The UPF 203 (or more specifically the NW-TT 207) routes each Ethernet frame based on its destination MAC (Medium Access Control) address (and VLAN (Virtual Local Area Network) ID) in the frame to the corresponding egress ports. In DL direction the NW-TT 207 routes the frame to a PDU session 208 associated with the corresponding DS-TT port. In UL direction the NW-TT 207 routes the frame to a corresponding NW-TT port.

Thus, when implemented by a 5GS, the IEEE 802.1Q Ethernet bridge functionality is split between NW-TT 207 and DS-TT 206, which are connected via a PDU session 208. In particular, the actions in the frame forwarding process as defined in IEEE 802.1Q are split between DS-TT 206 and NW-TT 207.

A CNC (Centralized Network Configuration) entity in the (bridge-) external TSN network can configure the 5GS virtual bridge 200 via an API (Application Programming Interface) exposed by an Application Function (AF) in the 5GS. The AF distributes the bridge configuration to the UEs 201 (specifically the DS-TTs 206) and the UPF 203 (specifically the NW-TT 207) using a transparent container via PCF 115 and SMF 110, 112.

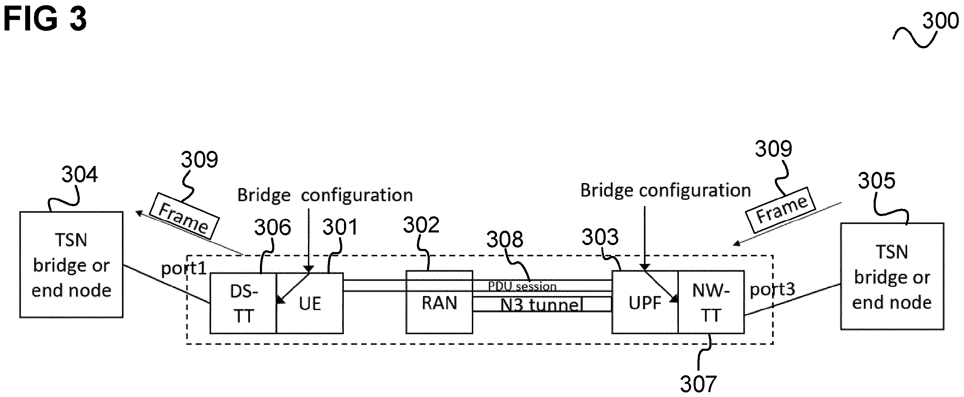

Figure 3 shows an example of a forwarding of an Ethernet frame by a 5GS Ethernet bridge 300.

As explained with reference to figure 2, the Ethernet bridge 300 is provided by a UE 301 implementing a DS-TT 306, a RAN 302 and A UPF 303 implementing a NW-TT 307 and forms a bridge between other TSN nodes 304, 305.

A frame 309 arrives at port#3 provided by the NW-TT 307 with a destination MAC address that makes the NW-TT 307 forward the frame to a PDU session#1 308 that is associated with port#1 provided by DS-TT 306. The frame has a priority (with a value X) which is also referred to external priority herein to distinguish it from the (bridge-) internal priority discussed further below.

Since the egress port in this example is at DS-TT 306, the DS-TT 306 is responsible for 802.1Q egress port specific actions, e.g. queuing frames to implement a Time Aware Shaper (TAS). When the DS-TT 306 is queuing frames, one possibility is that the DS-TT 306 determines the traffic class of the frame based on the priority of the frame (external priority) and assigns the frame to the queue of the traffic class.

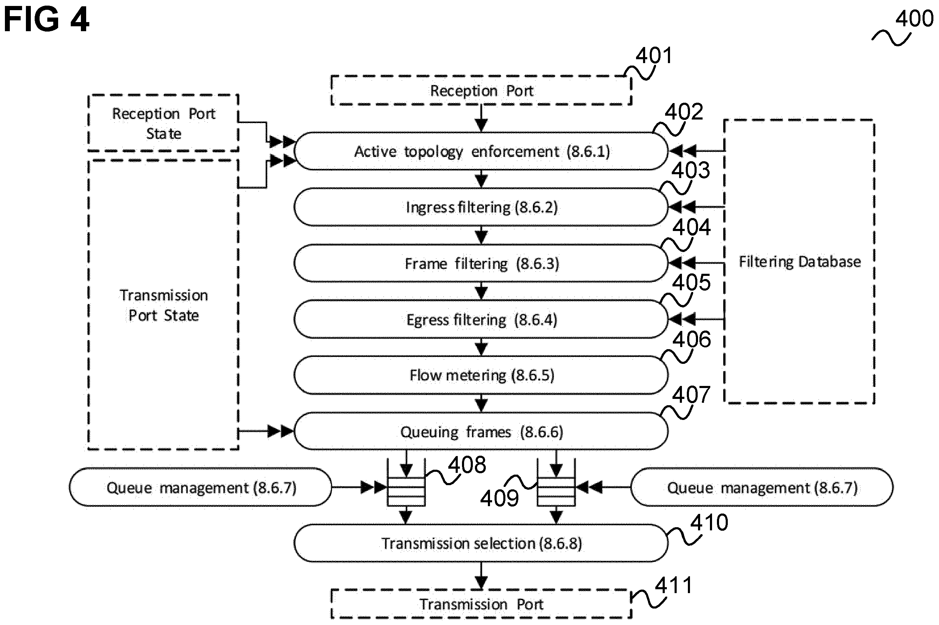

The NW-TT 307 is responsible for 802.1Q Flow metering, including per-stream filtering and policing (PSFP) which is a part of the bridge forwarding process as illustrated in figure 4.

Figure 4 shows a flow diagram 400 illustrating an Ethernet bridge forwarding process.

The forwarding process for a frame received at a reception port 401 (also referred to as ingress port) and forwarded inside the bridge to a transmission port 411 (also referred to as egress port) includes active topology enforcement 402, ingress filtering 403, frame filtering 404, egress filtering 405, flow metering 406, queuing of frames 407 to transmission queues 408, 409 and transmission selection 411.

The queuing of frames 407 to the transmission queues 408, 409 (also referred to as egress queues) includes processing by a Time-Aware Shaper, implemented close to the egress port 411 (i.e. by the DS-TT 306 in case of downlink direction as in figure 3).

Flow metering 406 includes PSFP and is implemented close to the ingress port 401 (i.e. by the NW-TT 306 in case of downlink direction as in figure 3).

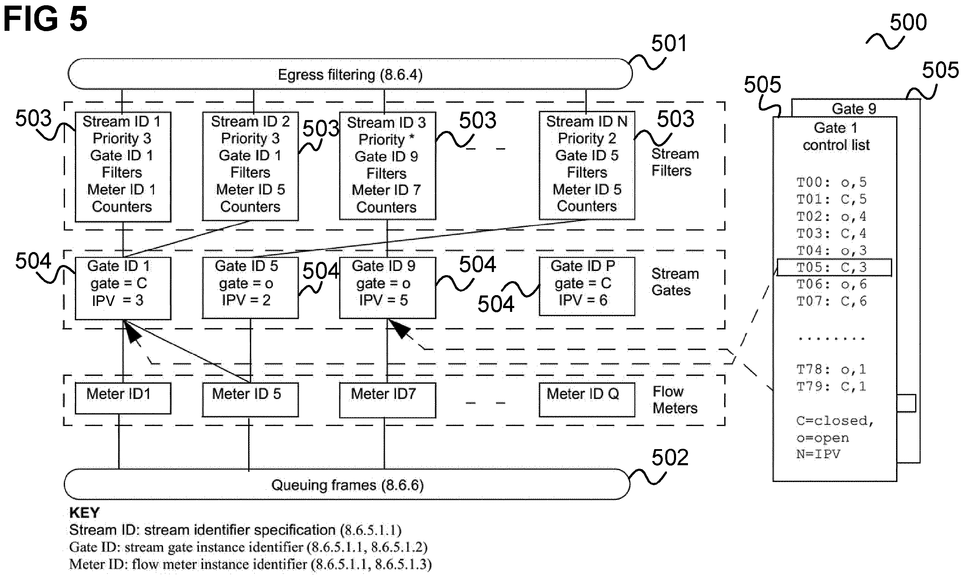

Figure 5 shows a flow diagram 500 illustrating per-stream filtering and policing (PSFP).

As shown in figure 4, PSFP takes place between egress filtering 501 and queuing of frames 502 to transmission queues.

The PSFP process allows filtering and policing of the frames on per-stream basis:
First, a received frame is matched against multiple stream filters 503.

Each stream filter 503 can contain the e.g. a frame priority (external priority), source and/or destination MAC address that he frame is matched against.

If the received frame matches with a stream filter, the frame is submitted to a respective stream gate 504 that is associated with the stream filter 503.

Each stream gate 504 is controlled by a respective stream gate control list 505 which defines when the stream gate 504 is open and when it is closed, depending on the time-of-day.

If the stream gate is open, frames are permitted to pass through the gate, and are further processed by the next steps in the bridge forwarding process. If the gate is closed, frames are not permitted to pass through the gate.

The stream gate 504 can define an internal priority value (IPV). For a frame that passes through the gate, the IPV is used, in place of the external priority value associated with the frame, to determine the frame's traffic class.

The main enabler for synchronous traffic deterministic forwarding services is Cyclic Queuing and Forwarding (CQF). Cyclic queuing and forwarding (CQF) is a method of traffic shaping that can deliver deterministic, and easily calculated, latency for time-sensitive traffic streams. More specifically, CQF typically combines the Time-Aware Shaper (TAS) at the egress port 411 and the Per-Stream Filtering and Policing (PSFP) at the ingress port 401, to shape and regulate the transmission selection. The CQF cyclic operation results in an easily calculable latency bound governed by the chosen Cycle Time and the number of end-to-end hops between communicating parties. In CQF, time is divided into slots or intervals (similar to TAS). For a given traffic class, two queues 408, 409 are used to enable the cyclic property. Frames arriving in interval x will be transmitted in interval x + 1. Similarly, frames arriving in interval x + 1 are transmitted in interval x + 2, and so on.

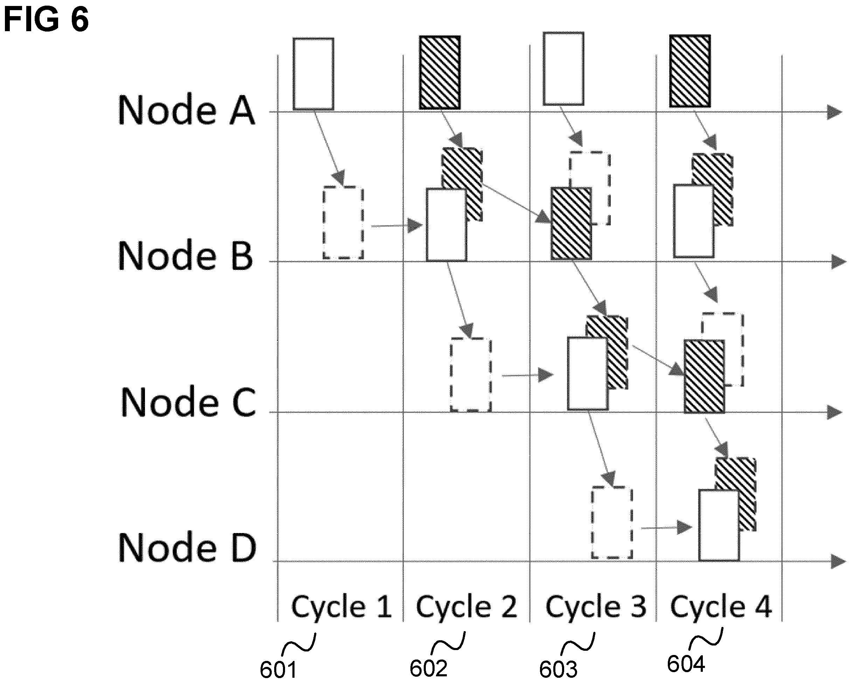

Figure 6 illustrates CQF in 2-queue operation.

In this case, two transmission queues are implemented to handle enqueue and dequeue operations in separate time intervals 601-604. For example, frames arriving in even intervals 601, 603 will be enqueued in the first queue (illustrated by blocks without hatching) while frames arriving in odd intervals 601, 603 will be enqueued in the second queue (illustrated by blocks with hatching).

This means that time is divided into a series of equal time intervals 601-604 with the duration of T, each time interval is called a "cycle". CQF assumes that a frame is transmitted from an upstream TSN node (e.g. TSN node 305 for the downlink case) in a cycle and the frame must be received at the downstream TSN node (e.g. TSN node 304 for the downlink case) in the same cycle, and it must be transmitted out in the next cycle to the next hop downstream node.

While the transport gate for one transmission queue (no hatching) is open, the gate for other queue (hatching) is closed, and vice versa. Thus, the (time-critical) traffic is transmitted and queued for transmission along a path in a cyclic manner;

This is suitable for small networks, where link delay is trivial, and processing delay and jitter is small. Otherwise, more bandwidth has to be reserved as a guard band for each cycle, and the effective bandwidth for critical services will be greatly reduced.

A 3-Queue CQF may be used to handle out of synch packets (due to processing delay variations) that arrive in the wrong cycle by adding another queue that buffers this type of packets. Generally, if the bridges (or switches) in a network need to absorb more jitter/burst capacity, more queues can be used. Similarly, if the network typically has low jitter and traffic burstiness, then two queues are sufficient.

As Per-Stream Filtering and Policing (PSFP) is implemented at the ingress port 401, the identity of the transmission queues 408, 409 need to be expressed from the ingress port to the Time-Aware Shaper at the egress port. For this, the internal priority value (IPV) is used.

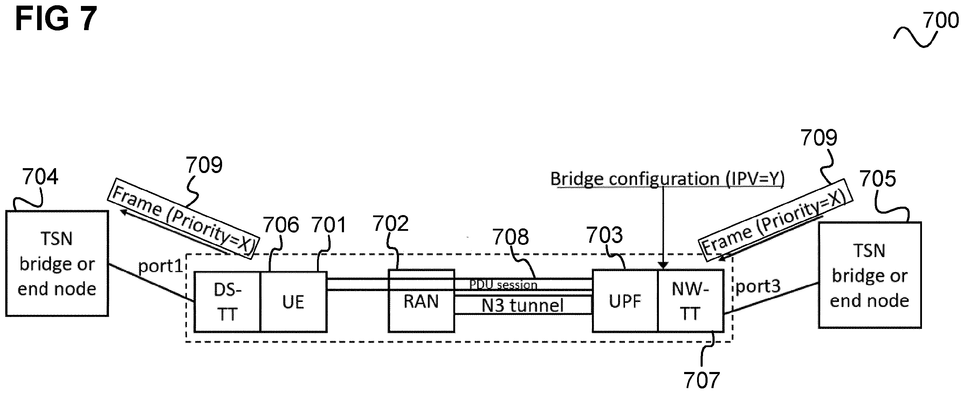

Figure 7 shows an example of a selecting a traffic class based on an internal priority value at the egress port of a 5GS Ethernet bridge 700.

As explained with reference to figure 2, the Ethernet bridge 700 is provided by a UE 701 implementing a DS-TT 706, a RAN 702 and A UPF 703 implementing a NW-TT 707 and forms a bridge between other TSN nodes 704, 705.

As in figure 3, it is assumed that a frame 709 is received in downlink direction, i.e. the ingress port is a port provided by the NW-TT 307. The uplink direction may be implemented similarly with the DS-TT 706 and the NW-TT 707 switching roles.

The frame 709 is assumed to have an (external) priority value X which matches with a stream filter 503 that is associated with a stream gate 504 that includes an internal priority value IPV = Y.

When the frame 709 leaves the bridge, it should have the same external priority value as when it has been received, i.e. external priority =X.

However, when the DS-TT 706 is queuing the frame 709 (i.e. assigning the frame 709 to a transmission queue 408, 409) the DS-TT 706 needs to use the IPV to determine the traffic class and the corresponding transmission queue 408, 409 instead of the external priority value = X.

Therefore, according to various embodiments, the DS-TT 706 does not assign the frame 709 to a transmission queue 408, 409 based on the external priority value of the frame 709 (which would disrespect the IPV value). Rather, the DS-TT 706 uses the IPV of the frame as configured in the stream gate 504 associated with the stream filter 503 that was matched to the frame (i.e. that fit to the frame) with respect to PSFP parameters in the NW-TT 707.

For this, according to various embodiments, the NW-TT 707 forwards the IPV along with the frame 709 (e.g. inside a header or payload of the frame) to the DS-TT 706 (or vice versa for the uplink direction).

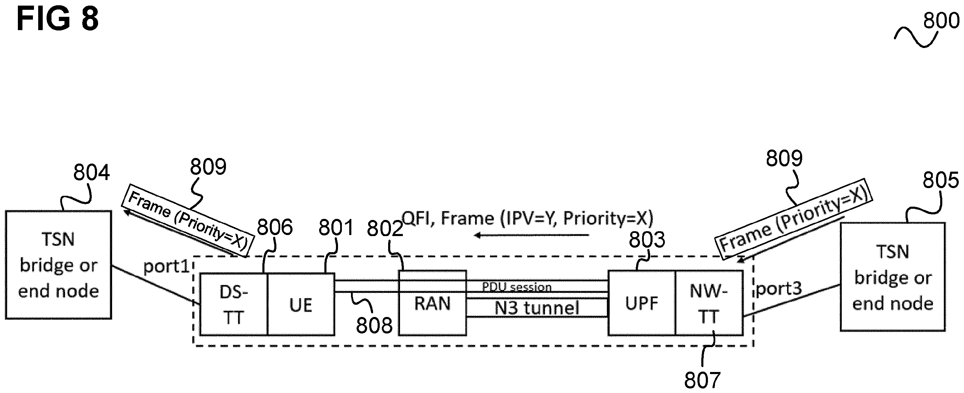

Figure 8 shows an example of a selecting a traffic class based on an internal priority value at the egress port of a 5GS Ethernet bridge 800.

As explained with reference to figure 2, the Ethernet bridge 800 is provided by a UE 801 implementing a DS-TT 806, a RAN 802 and A UPF 803 implementing a NW-TT 807 and forms a bridge between other TSN nodes 804, 805.

As in figure 7, it is assumed that a frame 809 is received in downlink direction, i.e. the ingress port is a port provided by the NW-TT 807. The uplink direction may be implemented similarly with the DS-TT 806 and the NW-TT 807 switching roles. Further, as in figure 7, the frame 809 is assumed to have an (external) priority value X.

The ingress TT (NW-TT 807 for the present example of downlink direction) performs PSFP for the frame 809 and if there is an IPV that needs to be used in the egress TT (by DS-TT 806 for the present example of downlink direction), the ingress TT transmits the IPV to the egress TT. For example, as described above, the ingress TT matches the frame 809 with a stream filter 503 that is associated with a stream gate 504 that includes an internal priority value IPV = Y and transmits this IPV to the egress node. For example, the ingress TT adds the IPV to a header layer or field (which the ingress TT may add to the frame 809) before the ingress TT sends the frame towards the corresponding PDU session 808. It should be noted that the ingress TT may further include a QoS Flow ID (QFI) to the frame.

The egress TT detects the header carrying the IPV and uses it to assign the frame to a transmission queue 408, 409 and then discards the IPV and removes the IPV header from the Ethernet frame 809 before sending it out via the egress port to the next TSN node 804.

The header layer or field used by the ingress node for transmission of the IPC could be generically defined, so that it can be used to convey any information related to a split bridge that needs to be assigned to a frame. It should be noted that a regular Ethernet bridge may be implemented inside one product from one vendor, but in case of 5GS virtual bridge the bridge functions are split between DS-TT and NW-TT, which may be from different vendors and still need to be interoperable.

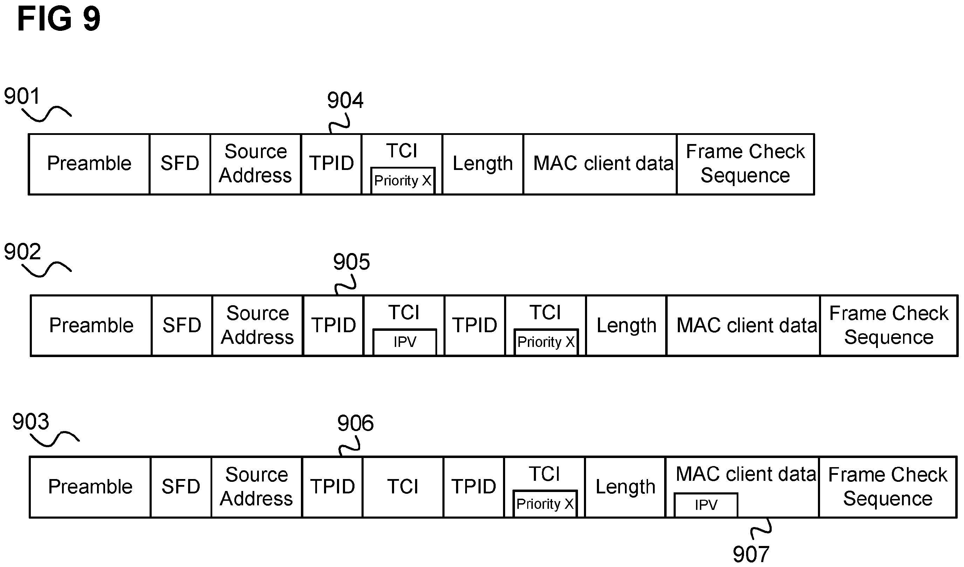

Figure 9 illustrates options to transmit an internal priority value in an Ethernet frame.

The top frame representation 901 in figure 9 illustrates an Ethernet frame as it is received from outside the 5GS bridge. It in particular includes a header field 904 with a TPID (tag protocol identifier, typically set to 81-00) followed by TCI (tag control information) which for example includes the (external) frame priority X.

As a first option illustrated by the middle frame representation 902 in figure 9, the ingress TT may use an additional header field 905 of a newly defined EtherType e.g. "3GPP-IPV Tag" (e.g. with a value 82-00) followed by TCI where the ingress TT includes the IPV.

As a second option illustrated by the bottom frame representation 903 in figure 9, the ingress TT may use an additional header field 906 of a newly defined EtherType e.g. "organization-specific extension" which indicates that ingress TT has included the IPV in the payload data 907 (e.g. by organization-specific TLV extension as in gPTP).

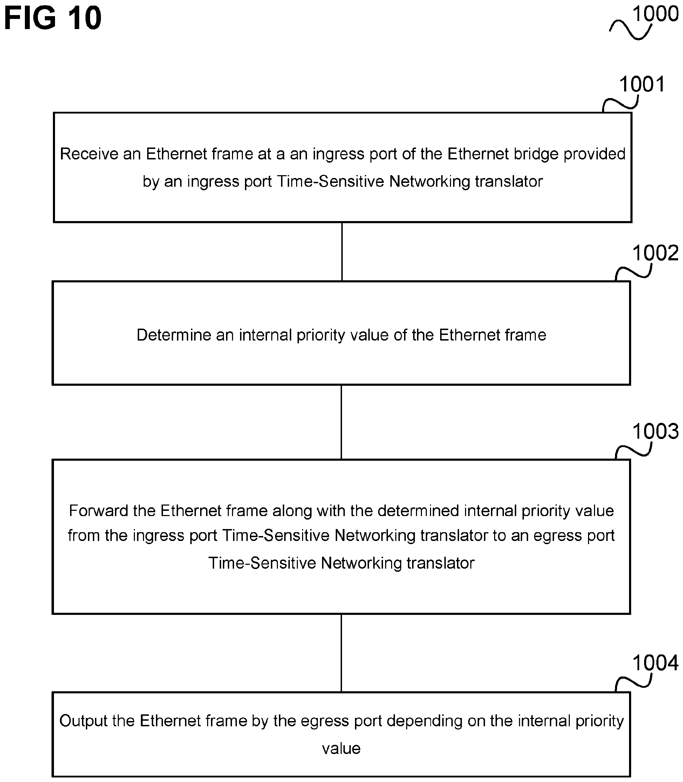

In summary, according to various embodiments, a method is provided as illustrated in figure 10.

Figure 10 shows a flow diagram 1000 illustrating a method for forwarding an Ethernet frame by a Time-Sensitive Networking Ethernet bridge provided by means of a mobile radio communication system to an embodiment.

In 1001, a Ethernet frame is received at a an ingress port of the Ethernet bridge provided by an ingress port Time-Sensitive Networking translator.

In 1002, the ingress port Time-Sensitive Networking translator determines an internal priority value of the Ethernet frame.

In 1003, the Ethernet frame is forwarded along with the determined internal priority value from the ingress port Time-Sensitive Networking translator to an egress port Time-Sensitive Networking translator providing an egress port of the Ethernet bridge.

In 1004, the egress port Time-Sensitive Networking translator outputting the Ethernet frame by the egress port depending on the internal priority value.

According to various embodiments, in other words, an internal priority value (IPV) is conveyed inside a mobile communication system (e.g. 5GS) Ethernet bridge between the TSN translators (NW-TT and DS-TT). Conveying the IPV allows implementing a Cyclic Queuing and Forwarding (CQF) procedure (as specified by IEEE 802.1Q) in a mobile communication system (e.g. 5GS) bridge. CQF can be used to ensure bounded latency within a TSN network (that the bridge is part of).

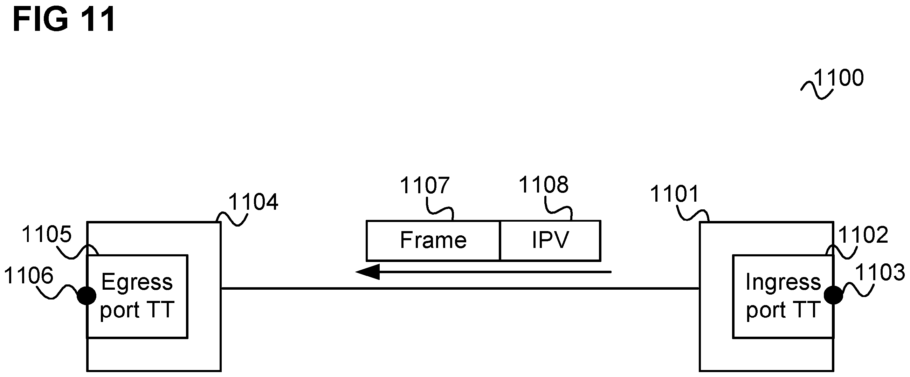

The method of figure 10 is for example carried out by an mobile radio communication system arrangement as illustrated in figure 11.

Figure 11 shows a mobile radio communication system arrangement 1100 configured to provide a Time-Sensitive Networking Ethernet bridge according to an embodiment.

The mobile radio communication system arrangement 1100 comprises a first mobile radio communication system component 1101 configured to implement an ingress port Time-Sensitive Networking translator 1102 and an ingress port 1103 of the Ethernet bridge;.

The mobile radio communication system arrangement 1100 further comprises a second mobile radio communication system component configured to implement an egress port Time-Sensitive Networking translator 1104 and an egress port 1105 of the Ethernet bridge.

The first mobile radio communication system component 1101 is configured to receive an Ethernet frame 1107 at the ingress port 1103, to determine an internal priority value 1108 of the Ethernet frame 1107 and to forward the Ethernet frame 1107 along with the determined internal priority value 1108 to the second mobile radio communication system component 1102.

The second mobile radio communication system component 1102 is configured to output the Ethernet frame 1107 by the egress port 1106 depending on the internal priority value 1108.

According to various embodiments, the mobile radio communication system components 1101, 1104 are separate devices, for example coupled via a radio connection, i.e. the mobile radio communication system's air interface.

According to a further embodiment, a method to transmit an internal priority value of an Ethernet frame within 5G system is provided where the TSN translator at the ingress port determines the internal priority value of an Ethernet frame based on the identification of the said frame and received configuration for said frame, the TSN translator at the ingress port transmits the determined internal priority value to the TSN translator at the egress port and the TSN translator at the egress port uses the received internal priority value to determine the transmission queue for the said Ethernet frame.

The mobile communication system components may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A method (1000) for forwarding an Ethernet frame by a Time-Sensitive Networking Ethernet bridge provided by means of a mobile radio communication system comprising:
receiving (1002) the Ethernet frame at a an ingress port of the Ethernet bridge provided by an ingress port Time-Sensitive Networking, TSN, translator (207, 307);
the ingress port TSN translator (207, 307) determining (1002) an internal priority value of the Ethernet frame;
forwarding (1003) the Ethernet frame along with the determined internal priority value from the ingress port TSN translator to an egress port TSN (206, 306) translator providing an egress port of the Ethernet bridge; and
the egress port TSN translator (206, 306) outputting (1004) the Ethernet frame by the egress port depending on the internal priority value;
wherein the ingress port TSN translator (207, 307) matches the Ethernet frame against multiple stream filters and submits the Ethernet frame to a stream gate associated with a matching stream filter, wherein the stream gate defines the internal priority value.

2. The method of claim 1, wherein the ingress port TSN translator (207, 307) determines the internal priority value based on an identification of the Ethernet frame and/or configuration information for the Ethernet frame.

3. The method of claim 1 or 2, wherein the ingress port TSN translator (207, 307) determines the internal priority value based on an external priority of the Ethernet frame.

4. The method of claim 3, wherein the external priority is a Priority Code Point.

5. The method of any one of claims 1 to 4, wherein the ingress port TSN translator (207, 307) determines the internal priority value based on a reception time of the Ethernet frame.

6. The method of any one of claims 1 to 5, wherein the ingress port TSN translator (207, 307) determines the internal priority value based on a time interval of a sequence intervals during which the Ethernet frame was received.

7. The method of any one of claims 1 to 6, wherein the egress port TSN translator assigns the Ethernet frame to an output queue of multiple output queues depending on the internal priority value.

8. The method of any one of claims 1 to 7, wherein the egress port TSN translator transmits the internal priority value to the egress port TSN translator by inserting it into a header or a payload of the Ethernet frame.

9. The method of any one of claims 1 to 8, wherein the ingress port TSN translator (207, 307) is implemented by a first component of the mobile radio communication system and the egress port is implemented by a second component of the mobile radio communication system, wherein the first component and the second component are coupled via a radio connection and wherein the Ethernet frame is forwarded from the ingress port TSN translator (207, 307) to the egress port TSN translator along with the determined internal priority over the radio connection.

10. The method of any one of claims 1 to 9, wherein the ingress port TSN translator (207, 307) is implemented by a core network component of the mobile radio communication system and the egress port TSN translator is implemented by a mobile terminal of the communication system or wherein the egress port TSN translator is implemented by a core network component of the mobile radio communication system and the ingress port TSN translator (207, 307) is implemented by a mobile terminal of the communication system.

11. The method of claim 10, wherein the core network component is a user plane function.

12. The method of any one of claims 1 to 11, wherein the mobile radio communication system is a 5G communication system.

13. A mobile radio communication system arrangement configured to provide a Time-Sensitive Networking Ethernet bridge and comprising:
a first mobile radio communication system component configured to implement an ingress port Time-Sensitive Networking, TSN, translator (207, 307) and an ingress port of the Ethernet bridge; and
a second mobile radio communication system component configured to implement an egress port TSN translator and an egress port of the Ethernet bridge;
wherein the first mobile radio communication system component is configured
to receive an Ethernet frame at the ingress port;
to determine an internal priority value of the Ethernet frame; and
to forward the Ethernet frame along with the determined internal priority value from the ingress port TSN translator (207, 307) to the second mobile radio communication system component; and
wherein the second mobile radio communication system component is configured to output the Ethernet frame by the egress port depending on the internal priority value;
wherein the ingress port TSN translator (207, 307) is configured to match the Ethernet frame against multiple stream filters and submit the Ethernet frame to a stream gate associated with a matching stream filter, wherein the stream gate defines the internal priority value.

14. A computer program and a computer readable medium comprising instructions, which, when executed by a computer, make the computer perform the method of any one of claims 1 to 12.

## Patentansprüche

1. Ein Verfahren (1000) zum Weiterleiten eines Ethernet-Datenübertragungsblocks mittels einer Zeitkritischer-Netzwerkbetriebs-Ethernetbrücke, die mittels eines Mobilfunkkommunikationssystems bereitgestellt ist, umfassend:
Empfangen (1002) des Ethernet-Datenübertragungsblocks an einer Eingangsschnittstelle der Ethernetbrücke, die mittels eines Eingangsschnittstellen-Zeitkritischer-Netzwerkbetriebs-, TSN, Übersetzers (207, 307) bereitgestellt ist;
wobei der Eingangsschnittstellen-TSN-Übersetzer (207, 307) einen internen Prioritätswert des Ethernet-Datenübertragungsblocks ermittelt (1002);
Weiterleiten (1003) des Ethernet-Datenübertragungsblocks zusammen mit dem ermittelten internen Prioritätswert von dem Eingangsschnittstellen-TSN-Übersetzer an einen Ausgangsschnittstellen-TSN- (206, 306) Übersetzer, der eine Ausgangsschnittstelle der Ethernetbrücke bereitstellt; und
Ausgeben (1004), durch den Ausgangsschnittstellen-TSN-Übersetzer (206, 306), des Ethernet-Datenübertragungsblocks mittels der Ausgangsschnittstelle abhängig von dem internen Prioritätswert;
wobei der Eingangsschnittstellen-TSN-Übersetzer (207, 307) den Ethernet-Datenübertragungsblock mit mehreren Streamfiltern abgleicht und den Ethernet-Datenübertragungsblock an eine Streamschranke, die mit einem Abgleichungsstreamfilter assoziiert ist, übermittelt, wobei die Streamschranke den internen Prioritätswert definiert.

2. Das Verfahren gemäß Anspruch 1, wobei der Eingangsschnittstellen-TSN-Übersetzer (207, 307) den internen Prioritätswert basierend auf einer Identifikation des Ethernet-Datenübertragungsblocks und/oder Konfigurationsinformation für den Ethernet-Datenübertragungsblock ermittelt.

3. Das Verfahren gemäß Anspruch 1 oder 2, wobei der Eingangsschnittstellen-TSN-Übersetzer (207, 307) den internen Prioritätswert basierend auf einer externen Priorität des Ethernet-Datenübertragungsblocks ermittelt.

4. Das Verfahren gemäß Anspruch 3, wobei die externe Priorität ein Prioritätscodepunkt ist.

5. Das Verfahren gemäß einem der Ansprüche 1 bis 4, wobei der Eingangsschnittstellen-TSN-Übersetzer (207, 307) den internen Prioritätswert basierend auf einer Empfangszeit des Ethernet-Datenübertragungsblocks ermittelt.

6. Das Verfahren gemäß einem der Ansprüche 1 bis 5, wobei der Eingangsschnittstellen-TSN-Übersetzer (207, 307) den internen Prioritätswert basierend auf einem Zeitintervall einer Sequenz von Intervallen, während dem der Ethernet-Datenübertragungsblock empfangen wurde, ermittelt.

7. Das Verfahren gemäß einem der Ansprüche 1 bis 6, wobei der Ausgangsschnittstellen-TSN- (206, 306) Übersetzer den Ethernet-Datenübertragungsblock einer Ausgangswarteschlange von mehreren Ausgangswarteschlangen abhängig von dem internen Prioritätswert zuweist.

8. Das Verfahren gemäß einem der Ansprüche 1 bis 7, wobei der Ausgangsschnittstellen-TSN- (206, 306) Übersetzer den internen Prioritätswert an den Ausgangsschnittstellen-TSN-(206, 306) Übersetzer mittels dessen Einfügung in einen Kopf oder eine Nutzlast des Ethernet-Datenübertragungsblocks übermittelt.

9. Das Verfahren gemäß einem der Ansprüche 1 bis 8, wobei der Eingangsschnittstellen-TSN-Übersetzer (207, 307) mittels einer ersten Komponente des Mobilfunkkommunikationssystems implementiert ist und die Ausgangsschnittstelle mittels einer zweiten Komponente des Mobilfunkkommunikationssystems implementiert ist, wobei die erste Komponente und die zweite Komponente über eine Funkverbindung gekoppelt sind und wobei der Ethernet-Datenübertragungsblock von dem Eingangsschnittstellen-TSN-Übersetzer (207, 307) an den Ausgangsschnittstellen-TSN- (206, 306) Übersetzer zusammen mit der ermittelten internen Priorität über die Funkverbindung weitergeleitet wird.

10. Das Verfahren gemäß einem der Ansprüche 1 bis 9, wobei der Eingangsschnittstellen-TSN-Übersetzer (207, 307) mittels einer Kernnetzwerkkomponente des Mobilfunkkommunikationssystems implementiert ist und der Ausgangsschnittstellen-TSN-(206, 306) Übersetzer mittels eines Mobilfunkendgeräts des Kommunikationssystems implementiert ist oder wobei der Ausgangsschnittstellen-TSN- (206, 306) Übersetzer mittels einer Kernnetzwerkkomponente des Mobilfunkkommunikationssystems implementiert ist und der Eingangsschnittstellen-TSN-Übersetzer (207, 307) mittels eines Mobilendgeräts des Kommunikationssystems implementiert ist.

11. Das Verfahren gemäß Anspruch 10, wobei die Kernnetzwerkkomponente eine Nutzerebenenfunktion ist.

12. Das Verfahren gemäß einem der Ansprüche 1 bis 11, wobei das Mobilfunkkommunikationssystem ein 5G-Kommunikationssystem ist.

13. Eine Mobilfunkkommunikationssystemanordnung, die eingerichtet ist, eine Zeitkritischer-Netzwerkbetriebs-Ethernetbrücke bereitzustellen, und umfasst:
eine erste Mobilfunkkommunikationssystemkomponente, die eingerichtet ist, einen Eingangsschnittstellen-Zeitkritischer-Netzwerkbetriebs-, TSN, Übersetzer (207, 307) und eine Eingangsschnittstelle der Ethernetbrücke zu implementieren;
eine zweite Mobilfunkkommunikationssystemkomponente, die eingerichtet ist, einen Ausgangsschnittstellen-TSN-Übersetzer und eine Ausgangsschnittstelle der Ethernetbrücke zu implementieren;
wobei die erste Mobilfunkkommunikationssystemkomponente eingerichtet ist,
einen Ethernet-Datenübertragungsblock an der Eingangsschnittstelle zu empfangen;
einen internen Prioritätswert des Ethernet-Datenübertragungsblocks zu ermitteln; und
einen Ethernet-Datenübertragungsblock zusammen mit dem ermittelten internen Prioritätswert von dem Eingangsschnittstellen-TSN-Übersetzer (207, 307) an die zweite Mobilfunkkommunikationssystemkomponente weiterzuleiten; und
wobei die zweite Mobilfunkkommunikationssystemkomponente eingerichtet ist, den Ethernet-Datenübertragungsblock mittels der Ausgangsschnittstelle abhängig von dem internen Prioritätswert auszugeben;
wobei der Eingangsschnittstellen-TSN-Übersetzer (207, 307) eingerichtet ist, den Ethernet-Datenübertragungsblock mit mehreren Streamfiltern abzugleichen und den Ethernet-Datenübertragungsblock an eine Streamschranke, die mit einem Abgleichungsstreamfilter assoziiert ist, zu übermitteln, wobei die Streamschranke den internen Prioritätswert definiert.

14. Ein Computerprogramm und ein computerlesbares Medium, umfassend Instruktionen, die, wenn mittels eines Computers ausgeführt, den Computer veranlassen, das Verfahren gemäß einem der Ansprüche 1 bis 12 auszuführen.

## Revendications

1. Procédé (1000) d'acheminement d'une trame Ethernet par un pont Ethernet de mise en réseau sensible au temps fourni au moyen d'un système de radiocommunication mobile, comprenant :
la réception (1002) de la trame Ethernet au niveau d'un port d'entrée du pont Ethernet fourni par un traducteur de mise en réseau sensible au temps, TSN, de port d'entrée (207, 307) ;
le traducteur TSN de port d'entrée (207, 307) déterminant (1002) une valeur de priorité interne de la trame Ethernet ;
l'acheminement (1003) de la trame Ethernet avec la valeur de priorité interne déterminée du traducteur TSN de port d'entrée vers un traducteur TSN de port de sortie (206, 306) fournissant un port de sortie du pont Ethernet ; et
le traducteur TSN de port de sortie (206, 306) émettant (1004) la trame Ethernet par le port de sortie en fonction de la valeur de priorité interne ;
dans lequel le traducteur TSN de port d'entrée (207, 307) compare la trame Ethernet à plusieurs filtres de flux et soumet la trame Ethernet à une porte de flux associée à un filtre de flux correspondant, la porte de flux définissant la valeur de priorité interne.

2. Procédé selon la revendication 1, dans lequel le traducteur TSN de port d'entrée (207, 307) détermine la valeur de priorité interne sur la base d'une identification de la trame Ethernet et/ou d'informations de configuration pour la trame Ethernet.

3. Procédé selon la revendication 1 ou 2, dans lequel le traducteur TSN de port d'entrée (207, 307) détermine la valeur de priorité interne sur la base d'une priorité externe de la trame Ethernet.

4. Procédé selon la revendication 3, dans lequel la priorité externe est un point de code de priorité.

5. Procédé selon l'une quelconque des revendications 1 à 4, dans lequel le traducteur TSN de port d'entrée (207, 307) détermine la valeur de priorité interne sur la base d'un temps de réception de la trame Ethernet.

6. Procédé selon l'une quelconque des revendications 1 à 5, dans lequel le traducteur TSN de port d'entrée (207, 307) détermine la valeur de priorité interne sur la base d'un intervalle de temps d'une séquence d'intervalles au cours duquel la trame Ethernet a été reçue.

7. Procédé selon l'une quelconque des revendications 1 à 6, dans lequel le traducteur TSN de port de sortie assigne la trame Ethernet à une file d'attente de sortie parmi plusieurs files d'attente de sortie en fonction de la valeur de priorité interne.

8. Procédé selon l'une quelconque des revendications 1 à 7, dans lequel le traducteur TSN de port de sortie transmet la valeur de priorité interne au traducteur TSN de port de sortie en l'insérant dans un en-tête ou une charge utile de la trame Ethernet.

9. Procédé selon l'une quelconque des revendications 1 à 8, dans lequel le traducteur TSN de port d'entrée (207, 307) est mis en oeuvre par un premier composant du système de radiocommunication mobile et le port de sortie est mis en oeuvre par un deuxième composant du système de radiocommunication mobile, dans lequel le premier composant et le deuxième composant sont couplés via une connexion radio et dans lequel la trame Ethernet est acheminée du traducteur TSN de port d'entrée (207, 307) au traducteur TSN de port de sortie avec la priorité interne déterminée sur la connexion radio.

10. Procédé selon l'une quelconque des revendications 1 à 9, dans lequel le traducteur TSN de port d'entrée (207, 307) est mis en oeuvre par un composant de réseau central du système de radiocommunication mobile et le traducteur TSN de port de sortie est mis en oeuvre par un terminal mobile du système de communication ou dans lequel le traducteur TSN de port de sortie est mis en oeuvre par un composant de réseau central du système de radiocommunication mobile et le traducteur TSN de port d'entrée (207, 307) est mis en oeuvre par un terminal mobile du système de communication.

11. Procédé selon la revendication 10, dans lequel le composant de réseau central est une fonction de plan d'utilisateur.

12. Procédé selon l'une quelconque des revendications 1 à 11, dans lequel le système de radiocommunication mobile est un système de communication 5G.

13. Agencement de système de radiocommunication mobile configuré pour fournir un pont Ethernet de mise en réseau sensible au temps et comprenant :
un premier composant de système de radiocommunication mobile configuré pour mettre en oeuvre un traducteur de mise en réseau sensible au temps (TSN) de port d'entrée (207, 307) et un port d'entrée du pont Ethernet ; et
un deuxième composant de système de radiocommunication mobile configuré pour mettre en oeuvre un traducteur TSN de port de sortie et un port de sortie du pont Ethernet ;
dans lequel le premier composant de système de radiocommunication mobile est configuré pour :
recevoir une trame Ethernet au niveau du port d'entrée ;
déterminer une valeur de priorité interne de la trame Ethernet ; et
acheminer la trame Ethernet avec la valeur de priorité interne déterminée du traducteur TSN de port d'entrée (207, 307) au deuxième composant de système de radiocommunication mobile ; et
dans lequel le deuxième composant de système de radiocommunication mobile est configuré pour sortir la trame Ethernet par le port de sortie en fonction de la valeur de priorité interne ;
dans lequel le traducteur TSN de port d'entrée (207, 307) est configuré pour comparer la trame Ethernet à plusieurs filtres de flux et soumettre la trame Ethernet à une porte de flux associée à un filtre de flux correspondant, la porte de flux définissant la valeur de priorité interne.

14. Programme informatique et support lisible par ordinateur comprenant des instructions qui, lorsqu'elles sont exécutées par un ordinateur, font que l'ordinateur exécute le procédé selon l'une quelconque des revendications 1 à 12.
